(19) Europäisches Patentamt
European Patent Office
Office européen des brevets

(11) **EP 4 461 768 A1**

(12) **EUROPEAN PATENT APPLICATION**

(43) Date of publication:
**13.11.2024 Bulletin 2024/46**

(21) Application number: **23172093.9**

(22) Date of filing: **08.05.2023**

(51) International Patent Classification (IPC):
**C08L 9/00** $^{(2006.01)}$

(52) Cooperative Patent Classification (CPC):
(C-Sets available)
**B60C 11/12; B60C 1/0016; B60C 11/005;
B60C 11/16; C08L 9/00;** B60C 2011/0025  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokian Renkaat Oyj
37101 Nokia (FI)**

(72) Inventors:
• **Kemppainen, Noora
37101 Nokia (FI)**
• **Ilomäki, Jouko
37101 Nokia (FI)**
• **Shakun, Alexandra
37101 Nokia (FI)**

(74) Representative: **Berggren Oy
P.O. Box 16
Eteläinen Rautatiekatu 10A
00101 Helsinki (FI)**

(54) **A PNEUMATIC TYRE WITH A THERMALLY ADAPTIVE UNDERLAYER**

(57)    The invention relates to a pneumatic tyre, which contains a structure wherein a thermally adaptive underlayer is positioned beneath a tread layer, wherein the thermally adaptive underlayer is based on a polymer system that has been selected to contain elastomers with distinct glass transition temperatures sufficiently far apart from each other and which exhibit low miscibility towards each other. Due to the tyre construction and the thermally adaptive underlayer, while driving a vehicle, the performance characteristics of the pneumatic tyre are configured to adapt to the driving conditions on the road based on the temperature experienced by the thermally adaptive underlayer. This is of particular relevance during colder seasons, such as for a winter tyre, wherein the thermally adaptive underlayer may be used to design an improved tread layer and for a studded pneumatic tyre, wherein the composition and thickness of the thermally adaptive underlayer may be used to control the dynamic impact of the stud on a driving surface, when the tyre is in motion.

Fig. 1b

EP 4 461 768 A1

(52) Cooperative Patent Classification (CPC): (Cont.)

C-Sets
**C08L 9/00, C08L 7/00, C08L 23/22, C08L 91/00,
C08L 91/00, C08K 3/04, C08K 5/09, C08K 3/22,
C08K 5/18, C08K 5/3437, C08K 5/47, C08K 3/06**

**Description**

Technical field

The invention relates to a method for manufacturing a pneumatic tyre and a product thereof, the pneumatic tyre comprising a thermally adaptive underlayer beneath a tread layer.

Background

In the Northern hemisphere, during the cold seasons, less daylight is available and the outside air temperature, as well as the road temperature, decrease considerably from those experienced during the warmer seasons, when more daylight is available. At the turn of a season, when autumn turns into winter, roads are often wet from moisture. When the road temperature falls below the freezing point of water, the moisture on the road surface freezes and the surface becomes slippery, due to the ice which forms on the road surface. Cold air fronts may further cause snow or slush to fall on the road, even if the outside air temperature is still above the freezing point of water, i.e. 273 degrees Kelvin or zero degrees Celsius. During winter the roads often remain frozen, for long time periods, without a break. When winter turns into spring, the increasing amount of sunlight causes the outside air temperature rises again. The roads, too, warm up and thus gradually dry again, though often unevenly, and may contain moisture and freeze again, due to seasonal fluctuation in the weather.

Traditionally in the Northern hemisphere, during the colder seasons motorized vehicles moving on the roads are equipped with pneumatic tyres, denoted as winter tyres, which contain a softer tread layer rubber composition than what is used in tyres during the summer and a tread structure designed for winter conditions. The tread structure typically contains larger grooves and narrower sipes designed to provide resistance against slippage, also known as winter grip properties. A softer tread layer rubber composition facilitates the generation of sufficient tyre grip of the driving surface. A winter tyre may also refer to a studded pneumatic tyre, which contains a plurality of studs comprising a bottom flange, a body and a pin, each stud having been embedded into the tyre tread such that the bottom flange and most of the body remain within the tyre but the pin protrudes upwards from the tread surface. Such arrangement of studs on a pneumatic tyre is designed to penetrate into hard-packed snow or ice on a driving surface, thereby producing increased grip, when the road surface is highly demanding for driving a motorized vehicle.

Downside of using a winter tyre is, that a softer tread layer is less durable and thus more prone to tread wear. Further, a softer tread layer increases the rolling resistance of a pneumatic tyre and thereby leads to increased fuel or electricity consumption, depending of the vehicle motor type. In addition, a combination of a heavy load and a studded pneumatic tyre, as typical with passenger cars, abrades a dry pavement rapidly. This leads to excess road wear and dust formed of the road surface.

The seasonal fluctuation disclosed above creates further challenges to the road traffic, since the weather may change rapidly during a journey and the distances to be covered on paved roads may be extensive. A vehicle and its pneumatic tyre may travel hundreds of kilometres without a pause during a single journey, while experiencing multiple different types of weather and road conditions, from paved city streets and highways to countryside terrain roads. The roads may be in different conditions, whereby a pneumatic tyre with given performance characteristics may not be optimal for all the conditions during the journey. Particularly challenging are the turns of the seasons, when the outside temperature may fluctuate considerably on both sides of the freezing point of water and a pneumatic tyre may during a single journey encounter both dry and warm driving surfaces as well as cold and frozen, even ice covered, surfaces. Changing the tyres of a vehicle is possible, but often tedious.

The challenges disclosed above are elevated due to the global climate change, which affects the weather conditions around the globe. This has already been observed in multiple ways, *inter alia* as an increase in both regional and seasonal temperature extremes. In the future, the temperatures and weather conditions have been predicted to fluctuate even more often.

Summary

Majority of the energy dissipation of a pneumatic tyre is derived from the tread region, which also contains a large proportion of the mass of the rubber components of a pneumatic tyre. The actual energy loss due to the deformation of rubber components originates primarily from the polymers they contain, which can be amplified by the presence of reinforcing filler material. To reduce the energy dissipation, polymers producing less hysteresis may be selected. Hysteresis is a measure of the amount of energy lost per cycle during deformation of an elastomer. However, traditionally this has been difficult to implement, without compromising the tyre performance, such as grip and wear resistance.

The invention disclosed herein solves the problems above by providing a pneumatic tyre, which contains a structure wherein a thermally adaptive underlayer is positioned beneath a tread layer and wherein the thermally adaptive underlayer is based on a polymer system that has been selected to contain elastomers, which exhibit low miscibility towards each other, and wherein the polymer system, the glass transition temperatures of the elastomers are sufficiently far apart from each other. Thereby a pneumatic tyre comprising self-adjustable performance characteristics is obtainable, wherein the dynamic stiffness E* of the thermally adaptive underlayer is highly dependent of the temperature experienced by said layer in the vicinity of the freezing point of water, within the range of 258°K to 288°K. By self-adjustable performance characteristics it is meant that the behaviour of the thermally adaptive underlayer, in relation to other layers and components within the tyre, is configured to adapt to the driving conditions on the road based on the temperature experienced by the thermally adaptive underlayer, while driving a vehicle equipped with the tyre. In particular, a pneumatic tyre comprising a thermally adaptive underlayer may be configured to comprise a tread layer, wherein the dynamic stiffness E* remains relatively low and stable within the above indicated temperature range, even though within the same temperature range, the dynamic stiffness E* of the underlayer increases rapidly when the temperature decreases, and thereby may improve the handling and winter grip properties of the pneumatic tyre. This is of particular relevance to a winter tyre, wherein the composition and thickness of the thermally adaptive underlayer may be selected to adjust the movement of tread elements, such as sections of tread blocks containing sipes, in relation to each other within the tread layer. The tread blocks are surrounded by grooves and in a winter tyre contain sipes, which enable the tread blocks to bend. When the dynamic stiffness E* of the underlayer is arranged to decrease rapidly as the temperature increases within the temperature range of 258°K to 288°K, as indicated above, the adaptivity is beneficial. The dynamic stiffness E* of the underlayer is further arranged to remain relatively low and stable above the indicated temperature range. This is of particular relevance to a studded pneumatic tyre, wherein the extent of stud protrusion, that is, the length which a pin of a stud protrudes upwards from the tread surface, may thus be controlled by the composition and thickness of the thermally adaptive underlayer. The extent of protrusion of a stud from the tread surface has an effect to the dynamic impact which occurs, when the tyre is in motion and the pin contacts the driving surface. When a bottom flange of a stud is in contact with the thermally adaptive underlayer, such that at least part of the thermally adaptive underlayer remains beneath the bottom flange, the thermally adaptive underlayer may be arranged to act as a dampening element for the stud. The temperature experienced by the thermally adaptive underlayer may thus be used for adjusting the flexibility of said layer, such that the dynamic impact caused by the stud on a driving surface is dependent of the temperature experienced by the thermally adaptive underlayer, when the tyre is in motion. On a warmer weather and driving surface, the studded pneumatic tyre thus lasts longer and causes less road wear.

When a pneumatic tyre containing an underlayer is in motion, forces experienced by an inflated pneumatic tyre mounted on a rim and fitted to a standard passenger car, such as inertia and damping, cause the temperature of the pneumatic tyre and its components to increase. However, when the air and driving surface temperatures are colder than the temperature of the pneumatic tyre and its components, such as close to the freezing temperature of water, i.e. 273°K, significant heat transfer takes place between the pneumatic tyre and the exterior surroundings, which causes the internal temperature of a pneumatic tyre to decrease. Since the underlayer is shielded from the driving surface and outside air by at least a tread layer, the temperature of the underlayer may differ from the temperature of the tread layer. The underlayer is further shielded from the interior air space by the carcass, often also by one or more rubber and metal components. Experimental studies indicate that the temperature of the underlayer is typically in the range of 10°K to 15°K higher than the outside air temperature. Hence, while the behaviour of the thermally adaptive underlayer is dependent of the external air temperature caused by the weather and driving surface, when in motion, the decisive temperature for thermal adaptivity is the temperature of the underlayer.

Reference is made to the miscibility of polymers, as disclosed above. Miscibility at a molecular level relates to the surface free energy of the polymers. Two polymers which have large difference in their surface free energy levels do not easily mix into the same phase at a molecular level. However, an equilibrium phase morphology upon mixing may be reached, wherein the break-down process is in balance with the coalescence. Thus, when natural rubber, hereafter denoted as NR, and solution-polymerized styrene-butadiene rubber, hereafter denoted as S-SBR, which are not miscible at a molecular level, are mixed together mechanically into a rubber composition, a polymer system is obtained, wherein the two elastomers remain at least partially separated into different phases, and wherein each phase exhibits distinct and different domain morphologies, which have distinct characteristics that are dependent of the elastomers in the respective phases. However, while the low miscibility of the elastomers leads to a polymer system which contains separate domains, the NR may be arranged to remain as a continuous matrix in the polymer system, which further contains discrete zones of S-SBR separated by the continuous NR matrix. Thus a polymer system may be obtained, which comprises non-uniform characteristics, such as bimodal behaviour. Advantageously, the extent of phase separation and the amount of discrete zones of S-SBR in the polymer system is adjusted by the ratio of the two elastomers in the thermally adaptive rubber component. The relative amount of S-SBR to the NR in the polymer system is therefore proportional to the impact of the discrete zones in the rubber component comprising a continuous matrix. Hence, by adjusting the amount of S-SBR and the NR in the polymer system, the basic characteristics of the thermally adaptive underlayer may be controlled. The thermally adaptive rubber component may contain the S-SBR in an amount equal to or higher than 20 parts per hundred rubber, such as in the range of 20 to 80 parts per hundred rubber. The thermally adaptive rubber component may contain the NR in an amount equal to or higher than 20 parts per hundred rubber, such as in the range of 20 to 80 parts per hundred rubber. Advantageously, the SBR and NR are present in the thermally adaptive rubber component in substantially equal amounts. The expression "parts per hundred rubber", abbreviated as phr, is commonly used in rubber manufacturing to denote the mass proportion of a component in a rubber composition containing elastomer(s), wherein the mass of elastomer(s) is given a nominal value of 100. The specific rubber polymers present in a rubber product and their relative amounts may be determined according to ASTM D3452. The presence of separate domains in a polymer system can be confirmed from a rubber sample with imaging of the surface topography by atomic force microscopy.

Natural rubber is an elastomer which, in this context, refers to polyisoprene, which has been derived from a biogenic origin, such as from rubber trees (*Hevea*) or from non-rubber trees or plants, such as *Parthenium, Landolphia,* and/or *Taraxacum* species. NR derived from a biogenic origin, typically in the form of latex from a rubber tree, consists principally of cis-1,4-polyisoprene, which has a molecular weight in the range of 100,000 to 1,000,000 g/mol. Typically, the cis-1,4-polyisoprene content of NR is greater than 99% by weight. The molecular weight of NR can be reduced by processing, referred to as mastication, when preparing a rubber composition. Mastication is widely used in rubber processing to shorten the molecular chains of NR, whereby NR having a reduced molecular weight can be obtained, which also leads to NR comprising lower viscosity level. Mastication of NR facilitates the mixing of other elastomers, such as S-SBR, into the rubber composition. Mastication of NR also facilitates the even distribution of other substances, such as filler material, additives and curing agents, which are used to prepare a rubber composition for a thermally adaptive underlayer.

Solution-polymerized styrene-butadiene rubber is an elastomer, which belongs to a family of synthetic rubbers derived from styrene and butadiene monomers. S-SBR is typically produced by a homogeneous anionic polymerization process, which has been initiated by an alkyl lithium compound and wherein water and oxygen have been excluded. S-SBR has typically a molecular weight in the range of 100,000 to 2,000,000 g/mol. The relative content of the monomers in the S-SBR influences the properties of the polymer. When the styrene content is increased, a rubber component formed of the S-SBR becomes harder. The properties of S-SBR can also be influenced by the vinyl content of the butadiene monomer. By increasing vinyl content of S-SBR, the miscibility of the S-SBR towards NR may be improved, which can be detected visually of the morphology with transmission electron microscopy. When preparing a thermally adaptive underlayer, as disclosed above, the solution-polymerized styrene-butadiene rubber has advantageously a styrene content which is in the range of 25 to 45 % by mass, preferably 27 to 40 % by mass and a vinyl content which is in the range of 33 to 65 mol-%, preferably 38 to 61 mol-% relative to the butadiene, the contents determinable by 1H-NMR method in accordance with ISO 21561-1:2015.

Of further relevancy is, that the hysteretic properties of a polymer depend on temperature. Both NR and S-SBR are polymers having elastic properties, also denoted as elastomers, and which exhibit glass transition. Glass transition refers to a gradual and reversible phenomenon which occurs over a specific temperature range, wherein a polymer transits between a hard and relatively stiff state, denoted as a glassy state, and a more elastic state, denoted as a rubbery state. In temperatures lower than the glass transition temperature of the polymer, denoted as Tg, the material is in the glassy state and more rigid, whereas in temperatures higher than the Tg, the material is in the rubbery state. In other words, during glass transition, the properties of a polymer material change gradually, as function of temperature, when the material experiences a specific temperature range. Elastomers which are intended to be used in a pneumatic tyre are typically characterized in their rubbery state where they are more flexible, that is, in temperatures higher than their glass transition temperatures. Of notice is, that while the properties of the material change during glass transition, the material still remains in the same phase. Hence, the phenomenon is not a phase transition.

When NR and S-SBR which exhibit low miscibility towards each other are selected into a polymer system, and which further have distinct glass transition temperatures that are sufficiently far apart from each other, it is possible to prepare a thermally adaptive rubber component, wherein the poor miscibility and the glass transition phenomenon are exploited in unison. In particular, due to the different domain morphologies of the S-SBR and the NR, the NR present in a rubber component of a pneumatic tyre may be arranged to act as a polymer matrix over a wide temperature range typically experienced by the rubber component during use, whereas S-SBR present in the same rubber component may be arranged to undergo a glass transition, within the same temperature range. Hence, a rubber component suitable for use as an underlayer of a pneumatic tyre may be provided, which is thermally active such that when the temperature experienced by the rubber component decreases below a certain predefined threshold temperature, the S-SBR initially present in the rubber component as an elastomer separated from the NR phase begins to stiffen, as a function of the decreasing temperature. Due to the phase morphology explained above, the domains in the polymer system which contain S-SBR thus stiffen at a higher temperature than the domains which contain NR. Thus, the domains in the polymer system which contain S-SBR may be configured to become gradually glassy at a temperature range, wherein the domains which contain the NR still remain rubbery. At this predefined temperature range and in temperatures lower than the glass transition temperature of the S-SBR, the behaviour of the domains in the polymer system which contain S-SBR can thus be configured to resemble the behaviour of a reinforcing filler. As the glass transition phenomenon is reversible, the same applies inversely into the other direction, when the temperature experienced by the rubber component begins to increase. Hence, by preparing a rubber composition comprising a polymer system as disclosed above, wherein the elastomers possess different characteristics and low miscibility, a thermally adaptive rubber component responsive to the temperatures caused by seasonal fluctuation in weather and driving surface temperatures may be prepared.

Experimental studies indicate that advantageously the thermally adaptive rubber component comprises a polymer system that contains a first elastomer having a first glass transition temperature and a second elastomer having a second glass transition temperature, wherein a difference equal to or larger than 20°K exists between the glass transition temperatures and wherein the two elastomers have low miscibility towards each other. Advantageously, the first elastomer is S-SBR, which has a glass transition temperature at a temperature which is in the range of 235°K to 260°K, preferably in the range of 240°K to 255°K, and the second elastomer is natural rubber which has a glass transition temperature at a temperature which is less than 215°K, the glass transition temperature referring to a derivative signal determinable by differential scanning calorimetry under nitrogen atmosphere, in a temperature range of 123°K to 373°K, at a linear rate of 10°K/min according to in accordance with ISO 11357-2.

Experimental studies further indicate that a thermally adaptive underlayer of a pneumatic tyre, which contains a polymer system as disclosed above, produces two peak maximums, at temperatures separated by at least 35°K, wherein one peak maximum is above 273°K and another peak maximum is below 238°K, when determined as a tangent delta E"/E' from a cylindric sample in compression, using a dynamic mechanical thermal analysis (DMTA) and a temperature range from 213°K to 343°K, a heating rate of 2°K/min and a 10Hz frequency, in accordance with ISO 4664-1 (2010), the cylindric sample having a diameter of 4.5 mm and a height of 5.0 mm. Preferably, the two peak maximums occur at temperatures separated by a difference in the range of 35°K to 65°K, such that thermally adaptive rubber component, which contains a polymer system as disclosed above, produces a first peak maximum at a temperature in the range of 273°K to 290°K and a second peak maximum at a temperature in the range of 213°K to 238°K. The same result was obtained, when using cylindric samples in compression having a diameter of 10 mm and a height of 10 mm, wherein the cylindric samples represented thermally adaptive underlayer components, prior to assembly into a pneumatic tyre. The tangent delta E"/E' abbreviated as tanδ, denotes the loss factor, which is the ratio of the loss modulus E" to the storage modulus E'. The tangent delta gives a measure of the damping ability of the material and wherein peaks are associated with relaxation modes, such as glass transition.

Experimental studies further indicate that a thermally adaptive rubber component of a pneumatic tyre, which contains a polymer system as disclosed above, comprises a dynamic stiffness E* onset point temperature which is in the range of 278°K to 300°K, when determined from a cylindric sample in compression, using a dynamic mechanical thermal analysis and a temperature range from 213°K to 343°K a heating rate of 2°K/min and a 10Hz frequency, in accordance with ISO 4664-1 (2010), the cylindric sample having a diameter of 4.5 mm and a height of 5.0 mm. The dynamic stiffness E* describes the viscoelastic behaviour of the material as a ratio of stress to strain. A higher dynamic stiffness indicates that the component is more resilient, which implies lower hysteresis.

The temperature ranges where the glass transitions of the thermally adaptive rubber component, which contains the polymer system as disclosed above, may be adjusted by admixing further substances, such as additives or a further elastomer. In particular, the addition of further elastomer or an additive may be used to enlarge the distance between the temperature ranges, wherein the glass transitions in the thermally adaptive rubber component occur. The distance between the temperature ranges, wherein the glass transitions in the thermally adaptive rubber component occur, is preferably equal to or higher than 35°K, such as in the range of 35 to 60°K. The enlargement of the distance between the glass transitions in a thermally adaptive rubber component can be detected as a shift in the peak maximums in a dynamic mechanical thermal analysis, hereafter abbreviated as DMTA, when determined as a loss tangent E"/E' from a cylindric sample in compression, using a temperature range from 213°K to 343°K, a heating rate of 2°K/min and a 10Hz frequency. A preferred further elastomer is polybutadiene rubber, which is highly miscible with NR and may be mixed into the same phase, and may thus be used to provide better low-temperature flexibility for the polymer system in the thermally adaptive rubber component. Advantageously, the thermally adaptive underlayer component contains polybutadiene rubber in an amount in the range of 0 to 30 parts per hundred rubber, wherein the polybutadiene rubber has a glass transition temperature at a temperature which is in the range of 160°K to 193°K, preferably in the range of 163°K to 178°K.

The rubber composition of a thermally adaptive rubber component may contain further additives and curing agents, as needed. Additive, such as a resin that has a high miscibility towards the S-SBR, may be used to further adjust the temperature ranges where the glass transitions of the thermally adaptive rubber component, which contains the polymer system disclosed above, occurs. Advantageously, the resin is based on a hydrocarbon resin, more advantageously on an aromatic resin, which has a glass transition temperature that is higher than the glass transition temperature of the S-SBR and above the freezing temperature of water, such as equal to or higher than 290°K, such as in the range of 290°K to 330°K. The addition of such resin can be used to shift the tangent delta peak of the S-SBR phase, determinable by differential scanning calorimetry, hereafter abbreviated as DSC. When the glass transition temperature of the resin is higher than the glass transition temperature of the S-SBR, the shift of the S-SBR phase is directed toward higher temperatures. Advantageously, the thermally adaptive underlayer component contains the additive in an amount in the range of 1 to 30 parts per hundred rubber.

A pneumatic tyre for a vehicle is manufactured by preparing one or more rubber components, which are assembled into a green tyre with one or more textile and metal components. A rubber component is prepared by a stepwise mixing of elastomers, reinforcing filler material, additives, and curing agents into a rubber composition and shaping the rubber composition into a component. Once the components have been arranged onto a green tyre, the green tyre is cured. The curing refers to a chemical reaction, wherein the curing agents are used to form a covalent bonding, thereby bonding the components firmly together. The most typical curing is vulcanization, wherein sulphur crosslinks are formed between the molecules. The thermally adaptive rubber component, as disclosed above, is intended to be assembled into a structure of pneumatic tyre as an underlayer, which is positioned between a textile component and a tread layer. As disclosed above, the characteristics of a polymer system comprising NR and S-SBR with low miscibility towards each other in the underlayer rubber composition enable a tyre construction, wherein the dynamic stiffness E* may be configured to behave differently in the underlayer and in the tread layer, in temperatures below the ambient temperature of 295°K, preferably below 288°K. When combined with the position of the underlayer as an interior layer which is beneath a tread layer, the hysteresis produced by the underlayer may be adjusted such that it improves the tyre performance over a specific temperature range, as the temperature of the thermally adaptive rubber component changes. Advantageously, the thermally adaptive underlayer has a hardness which is in the range of 45 ShA to 65 ShA, when determined in accordance with ASTM D2240 at a temperature of 295°K. Preferably, at a temperature of 295°K, the thermally adaptive underlayer has a hardness which is in the range of 45 ShA to 60 ShA, most preferably in the range of 45 ShA to 55 ShA. Unfilled rubber compositions rarely demonstrate a sufficient hardness for an underlayer, and thus rubber component suitable for a pneumatic tyre typically contains a reinforcing filler material, such as carbon black, silica or a combination of these. The hardness of the thermally adaptive underlayer may be controlled by adjusting the amount and type of reinforcing filler materials used in the rubber component, as explained hereafter in the detailed description. A rubber composition suitable for a thermally adaptive underlayer component advantageously contains a reinforcing filler material in an amount equal to or higher than 30 parts per hundred rubber, such as in the range of 35 to 80 parts per hundred rubber. Advantageously, the rubber composition suitable for a thermally adaptive underlayer component, as disclosed above, contains carbon black that has a specific surface area in the range of 20 to 140 $m^2/g$, and may further or in alternative contain silica that has a specific surface area in the range of 70 to 250 $m^2/g$. Reinforcing fillers are generally admixed with the elastomers as solid particles also for the purpose of providing strength and resistance to abrasion for the rubber composition, once cured.

Referring to the above, in addition to the composition, also the thickness of the thermally adaptive underlayer may be controlled, wherein the thickness is determined as a cross-sectional thickness in a direction substantially perpendicular to the direction of rotation of the tyre, when the layer is not subjected to external forces, such as pressure caused by the driving surface. Advantageously, the thickness of the thermally adaptive underlayer is at least 0.3 mm, preferably at least 0.5 mm, such as in the range of 0.5 mm to 8 mm. As an interior layer shielded by the tread layer above, the layer does not require as high wear resistance as the tread layer. This enables a pneumatic tyre construction comprising a wear resistant tread layer rubber composition and a thermally adaptive underlayer beneath the tread layer, wherein, due to the composition of the underlayer, the resiliency of the underlayer is configured to be thermally adaptive and therefore arranged to change as a function of the temperature of the underlayer, when the outside temperature is close to the freezing temperature of water. Further, the combination of a substantially stable tread layer and an adaptive underlayer in temperatures close to the freezing temperature of water, as described above, may be arranged to provide a winter tyre with improved grip, wherein the pneumatic tyre comprises a plurality of sipes on the tread layer. An adaptive underlayer, as disclosed above, may be used to adjust the relative movement of tread blocks containing sipes and/or surrounded by grooves in temperatures close to the freezing temperature of water, such that the winter grip is improved. A pneumatic tyre construction comprising a thermally adaptive underlayer beneath the tread layer, as disclosed above, is particularly advantageous in a studded pneumatic tyre, which comprises a plurality of studs arranged to extend through the tread layer in a direction substantially parallel to a radial direction of the tyre, and wherein the thermally adaptive underlayer is in contact with the plurality of studs such that at least part of the thermally adaptive underlayer remains beneath the plurality of studs in the radial direction which radial direction is substantially perpendicular to the direction of rotation of the tyre.

Advantageously, the thermally adaptive underlayer has a thickness beneath the studs when the stud is in a rest position, that is, when the stud is not subjected to external forces, such as pressure caused by the driving surface. Advantageously, the studs are arranged such that a thickness of the underlayer beneath the studs is at least 0.3 mm, preferably at least 0.5 mm, when determined at locations beneath the bottom flanges of the studs. A thermally adaptive underlayer beneath the studs enables to adjust the dynamic impact of the pressure caused by the driving surface to the bottom flange of the stud, as a function of the temperature. When the outside air and/or the driving surface temperature rises above the freezing temperature of water, the temperature of the thermally adaptive underlayer also rises, whereby the underlayer become more flexible such that the bottom flange of the stud penetrates further into the underlayer beneath the stud, and the dynamic impact of the pressure caused by the driving surface is reduced. On the other hand, when the outside air and/or the driving surface temperature decreases again close to or below the freezing temperature of water, the temperature of the thermally adaptive underlayer also decreases, whereby the underlayer become less flexible such that the bottom flange of the stud penetrates less into the underlayer beneath the stud, and the dynamic impact of the pressure caused by the driving surface is increased, which improves the winter grip.

Thus, as disclosed above, there is provided a pneumatic tyre comprising an underlayer positioned between a textile component and a tread layer, wherein the underlayer is a thermally adaptive rubber component, which contains reinforcing filler material, additives, curing agents and a polymer system comprising

- a first elastomer having a first glass transition temperature and a second elastomer having a second glass transition temperature the first and the second elastomer having low miscibility towards each other,

and wherein

- the thermally adaptive rubber component contains the first elastomer in an amount in the range of 20 to 80 parts per hundred rubber and the second elastomer in an amount equal to or higher than 20 parts per hundred rubber,
- the first elastomer is solution-polymerized styrene-butadiene rubber,
- the second elastomer is natural rubber, and
- the difference between the first glass transition temperature and the second glass transition temperature is equal to or larger than 20°K,

the glass transition temperature referring to derivative signal determinable by DSC under nitrogen atmosphere, in a temperature range of 123°K to 373°K, at a linear rate of 10°K/min according to in accordance with ISO 11357-2.

Thus, as disclosed above, there is further provided a method for manufacturing a pneumatic tyre comprising a thermally adaptive underlayer, the method comprising

- selecting a first elastomer having a first glass transition temperature and a second elastomer having a second glass transition temperature which have low miscibility towards each other,
- mixing the elastomers, reinforcing filler material, additive, and curing agents together mechanically such that a rubber composition comprising a polymer system is obtained,
- shaping the rubber composition into a rubber component suitable for an underlayer of a pneumatic tyre,
- arranging the rubber component onto a green tyre such that the rubber component becomes positioned as an underlayer between a textile component and a tread layer, and
- curing the green tyre,

thereby obtaining a pneumatic tyre comprising a thermally adaptive underlayer,
wherein

- the thermally adaptive rubber component contains the first elastomer in an amount in the range of 20 to 80 parts per hundred rubber and the second elastomer in an amount equal to or higher than 20 parts per hundred rubber,
- the first elastomer is solution-polymerized styrene-butadiene rubber,
- the second elastomer is natural rubber, and
- the difference between the first glass transition temperature and the second glass transition temperature is equal to or larger than 20°K,

the glass transition temperature referring to a derivative signal determinable by DSC under nitrogen atmosphere, in a temperature range of 123°K to 373°K, at a linear rate of 10°K/min according to in accordance with ISO 11357-2.

Advantageously, a pneumatic tyre may comprise a thermally adaptive underlayer as disclosed above, which comprises, in parts per hundred rubber (phr),

- natural rubber in the range of 20 to 80 phr,
- solution-polymerized polystyrene-butadiene rubber in the range of 20 to 80 phr, the S-SBR having a styrene content which is in the range of 25 to 45 % by mass, preferably 27 to 40 % by mass, and a vinyl content which is in the range of 33 to 65 mol-%, preferably 38 to 61 mol-% relative to the butadiene,
- polybutadiene rubber, when necessary, in the range of 0 to 30,
- reinforcing filler material in the range of 30 to 80 phr,
- resin that has a high miscibility towards the first elastomer in the range of 1 to 30 phr,
- further additives, as needed, which comprise

○ oil, such as TDAE, in the range of 0 to 30 phr,
○ antidegradants in the range of 0 to 10 phr,
○ ZnO in an amount in the range of 2 to 4 phr,
○ stearic acid in an amount in the range of 1 to 3 phr, and

- curing agents, which comprise

○ vulcanization accelerators in the range of 1 to 5 phr, and
○ sulphur in an amount in the range of 1 to 5 phr.

Various parts of the description as disclosed herein, including the summary provided above and the detailed description provided hereafter, are meant to be read together and may be combined.

The invention is set out in the appended set of claims and further exemplified in the detailed description provided hereafter.

Brief description of the drawings

The symbols $S_x$, $S_z$ and $S_y$, when present in the Figures, refer to coordinate directions orthogonal to each other.

Fig. 1a      shows a schematic drawing of a pneumatic tyre,
Fig. 1b      shows a quarter of a cross-section of a pneumatic tyre,
Fig. 2       shows schematically a tread layer and an underlayer beneath the tread layer,
Fig. 3       shows schematically a stud arranged on a tread layer and an underlayer,
Fig. 4       illustrates a method for manufacturing a pneumatic tyre,
Fig. 5       is experimental data from DMTA, demonstrating the viscoelastic properties (tan $\delta$) of a cured rubber component in compression,
Fig. 6       is experimental data from DMTA, demonstrating the viscoelastic properties (tan $\delta$) of a sample of thermally adaptive underlayer in compression, obtained from a pneumatic tyre,
Fig. 7       is experimental data from DMTA, demonstrating the dynamic stiffness E* as a function of temperature of a cured rubber component in compression,
Fig. 8       is experimental data from DMTA, demonstrating the dynamic stiffness E* as a function of temperature of a sample of thermally adaptive underlayer in compression, obtained from a pneumatic tyre.

The schematic figures are for illustrative purposes, and not meant to limit the invention, which is disclosed in the appended set of claims.

Detailed description

Within this description the term tyre refers to a pneumatic tyre for a vehicle configured to be used on a wheel of a car, especially a passenger car. A winter tyre refers to a pneumatic tyre, including a studded pneumatic tyre, which may be used in vehicles in categories M1 and N1, as defined in the Consolidated Resolution on the Construction of Vehicles (R.E.3), document 15 ECE/TRANS/WP.29/78/Rev.4, para. 2. These categories are:

- M1: Vehicles used for the carriage of passengers and comprising not more than eight seats in addition to the driver's seat, and
- N1: Vehicles used for the carriage of goods and having a maximum mass not exceeding 3.5 tonnes.

In line with this, within this description, a road wear of a studded tyre is defined as the road wear in the test specified in the standard SFS7503:2022:en.

*A tyre comprising a thermally adaptive underlayer*

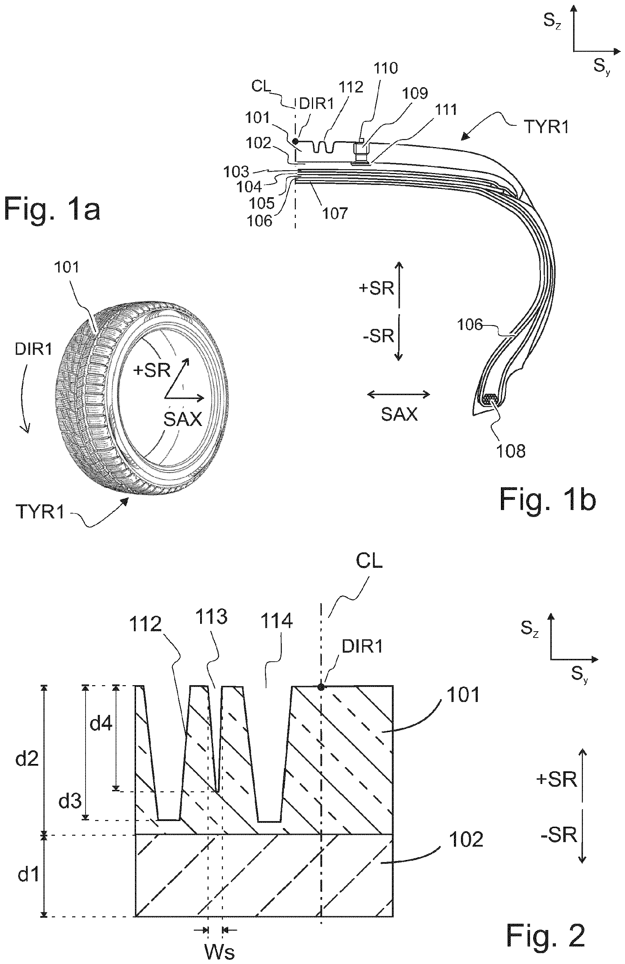

Reference is made to Figure 1a, which shows a schematic drawing of a pneumatic tyre TYR1. The tyre has an imaginary center point, from which an axial direction SAX and a radial direction SR may be defined. The axial direction SAX and the radial direction SR are directions which are perpendicular to each other. The direction of rotation DIR1 indicates movement which occurs when the tyre TYR1 is rotating and is perpendicular to the axial direction SAX and to the radial direction SR. The radial direction may be expressed with a positive sign +SR, to signify a direction extending towards the outer perimeter of the tyre TYR1, or with a negative sign -SR, to signify an opposite direction, which extends towards the imaginary center point of the tyre TYR1. The tread layer 101 is the outmost layer of the tyre TYR1 in the radial direction +SR, on the outer perimeter of the tyre TYR1.

Within this description the term layer refers to a circumferential component of a pneumatic tyre which is structurally connected to another layer. A layer by definition, such as a tread layer, intermediate layer or an underlayer, has a distinct chemical composition. A layer extends continuously around the tyre in a direction of rotation of the tyre, unless otherwise indicated. The thickness of a layer defines the thickness in a radial direction +SR of the layer, unless otherwise indicated. The thickness of a layer is determined from a cross-sectional sample of pneumatic tyre, as an arithmetic mean of two or more measurements determined from the vicinity of the circumferential centerline CL, the cross-sectional sample referring to a sample of a pneumatic tyre cut in axial direction SAX, which is perpendicular to the direction of rotation DIR1 of the tyre. The thickness of a layer is determined when the sample is not subjected to external forces, such as pressure caused by the driving surface, in radial direction +SR.

Reference is made to Figure 1b, which shows a cross-sectional view of a quarter of a pneumatic tyre TYR1 from a bead wire bundle 108 up to a circumferential centerline CL. The circumferential centerline CL divides the tyre TYR1 into two halves of equal width. The radial direction SR is a direction parallel to the centerline CL.

A pneumatic tyre TYR1 is typically manufactured as a radial tyre of multiple components. The tyre is constructed of a variety of materials, such as metal, textile and a plurality of rubber components, which have been bonded together by curing. A pneumatic tyre has a body ply 106 that is a layer of reinforcing textile component with a rubber coating, which is wrapped around the bead wire bundle 108, pass radially across the tire and wrap around the bead bundle on the opposite side (not shown). The body ply provides strength for the tyre to withstand internal air pressure, once inflated, as well as sidewall impact resistance. A pneumatic tyre for a standard passenger car contains at least one body ply. Larger pneumatic tyres may contain more than one body plies. The body ply 106 is typically a textile component manufactured from durable synthetic material, which provides sufficient strength and stability to the tyre carcass. The textile component may be manufactured for example from polyamide, such as nylon or rayon, polyester or aramid fiber. The bead wire bundle 108 is typically made of bronze plated steel wires, which are rubber coated and then wound into a bundle of specified diameter and configuration prior to assembly on a green tire. The bead bundles serve to anchor the inflated tire to the wheel rim. An innerliner 107 may be provided on the inner surface of the tyre. An innerliner is a rubber component formulated to prevent pressurized air permeation radially outwards in the direction +SR through the layers of the tyre.

A pneumatic tyre may contain one or more stabilizer plies 103, 104, 105 which are positioned on top the body ply 106 radially outward in direction +SR around the tire. The stabilizer plies are typically metal belts, such as steel belts 104, 105, which are applied between the body ply 106 and tread layer 101. A stabilizer ply 103 may in addition, or in alternative, be a textile component made of non-metal material, such as polyamide, for example nylon. The stabilizer plies 103, 104, 105 are meant to restrict the expansion of the body ply, stabilize the tread area and provide impact resistance. By varying the belt width and belt angle, the performance characteristics of the pneumatic tyre, such as vehicle stability and handling characteristics, may be adjusted.

The tread area comprises multiple rubber components, which comprise at least a tread layer 101 and an underlayer 102. The tread area may further comprise an intermediate layer between the tread layer 101 and the underlayer 102, which may be used for fine-tuning the performance characteristics of the pneumatic tyre, such as handling and rolling resistance. In a studded tyre, a intermediate layer with a sufficiently high dynamic stiffness may comprise a plurality of stud holes 115 which have been arranged to extend therein through a tread layer 101, upon manufacturing the studded tyre. The circumference of a stud hole 115 in the intermediate layer can thus be arranged to envelop a body of a stud installed into the stud hole 115 and provide further support for the stud body in directions perpendicular to the longitudinal direction of the stud, the longitudinal direction of the stud being parallel to the radial direction SR, which is particularly advantageous when such intermediate layer is used in combination with a thermally adaptive underlayer. A tread layer 101 is an exterior layer of the pneumatic tyre TYR1, which is meant to be in contact with the driving surface, when the pneumatic tyre is mounted on a vehicle wheel. The tread layer 101 is designed to provide grip during driving, braking and cornering a vehicle. The tread layer 101 typically comprises a rubber composition, which is meant to provide a balance between wear resistance, grip, handling and rolling resistance. The underlayer 102 is an interior component which is located beneath the tread layer 101. Since the underlayer 102 is shielded by the tread layer 101 above, the layer 102 does not require as high wear resistance as the tread layer 101. Further, the underlayer 102 may therefore experience different temperatures, when the pneumatic tyre is in motion. The underlayer 102 traditionally comprises a rubber composition designed to improve rolling resistance. However, when using a thermally adaptive underlayer, which is adaptive to the temperature experienced by the thermally adaptive underlayer, the dynamic stiffness of the underlayer 102 can also be used to adjust the performance characteristics of the pneumatic tyre, in particular performance characteristics relevant for winter grip, in conjunction with the tread layer 101. In particular, when the dynamic stiffness of the tread layer remains relatively stable but the dynamic stiffness of the underlayer is arranged to increase in the same conditions, preferably slightly above the freezing temperature of water and in temperatures below it which are typically experienced during the cold seasons in the Northern hemisphere, the magnitude of deformations caused by the underlayer 102 composition and thickness may be used to fine-tune the dynamic impact of studs installed into the pneumatic tyre or the extent of movement of the tread layer elements.

Reference is made to Figure 2. Advantageously, the thermally adaptive underlayer 102 has a thickness d1 in the radial direction +SR, wherein the thickness d1 is equal to or less than 7 mm, such as in the range of 0.5 mm to 7 mm, more preferably in the range of 1 mm to 6.5 mm, most preferably in the range of 1.5 mm to 6 mm. To improve the grip, the tread layer 101 comprises a pattern, which is molded into the tread during vulcanization or curing. The pattern typically comprises tread elements such as tread blocks 112 which are surrounded by grooves 114. The pattern has multiple functions, such as enablement of wear resistance and sufficient grip. When the tyre is designed for winter driving conditions, also the grip and handling of the tyre on wet, dry or snow and/or ice covered surfaces, is of importance. A winter tyre typically comprises a tread surface, wherein at least some of the tread blocks 112 are provided with sipes 113. Sipes 113 refer to narrow openings in the tread blocks 112. Sipes can be provided to reduce the stiffness of the tread blocks 112, whereby the relative movement of the tread block may be increased. The sipes are typically elongated in shape, having a width, a length and a depth, wherein the depth is parallel to the radial direction -SR and the length is the longest dimension perpendicular to the depth. Typically the width Ws of the sipes 113 is less than 2.0 mm. Typically the depth d4 of the sipes 113 is at least 2.0 mm. A bottom of a sipe 113 needs not be even. In such a case the depth d4 of the sipe 113 refers to a depth of the deepest point of the sipe 113. The combination of a tread layer 101 and an underlayer 102 with dynamic stiffness that increases as a function of the temperature, as described above, may be arranged to provide improved winter grip, wherein the lateral bending of the tread blocks 112 containing sipes 113 and/or surrounded by grooves 114 may be improved.

The grooves 114 have a depth d3 in a radial direction -SR. The depth d3 of the grooves 114 may vary. The depth of a groove 114 is determined from a cross-sectional sample of pneumatic tyre taken in axial direction SAX, which is perpendicular to the direction of rotation of the tyre DIR1. The depth is determined when the sample is not subjected to external forces, such as pressure caused by the driving surface, in radial direction -SR.The grooves 114 may extend through the thickness d2 of the tread layer 101 in the direction -SR. Typically, a tread layer 101 of a pneumatic tyre for a passenger car comprises a thickness d2 equal to or less than 25 mm in the radial direction SR. A tread layer thickness may be, for example, in the range of 2 mm to 25 mm, preferably at least 2.5 mm and most preferably at least 3 mm. Depending of the size of the pneumatic tyre and the purpose of the tyre, the thickness d2 may be varied. For instance, in winter tyres, which contain a softer tread layer rubber composition than what is used in tyres during the summer and wherein improved winter grip properties are desired, a depth d3 of at least one of the grooves 114 may be at least 5 mm and most preferably at least 7.5 mm, to allow better winter grip. The depth of at least one of the grooves may be, for example in the range of 5 to 15 mm, preferably in the range of 7 mm to 15 mm. The thickness of the underlayer 102 may be adjusted to improve the winter grip properties. Advantageously, the dynamic stiffness of the underlayer 102 is configured to increases more rapidly than the dynamic stiffness of the tread layer 101, in a temperature range close to the freezing temperature of water, i.e. 273°K.

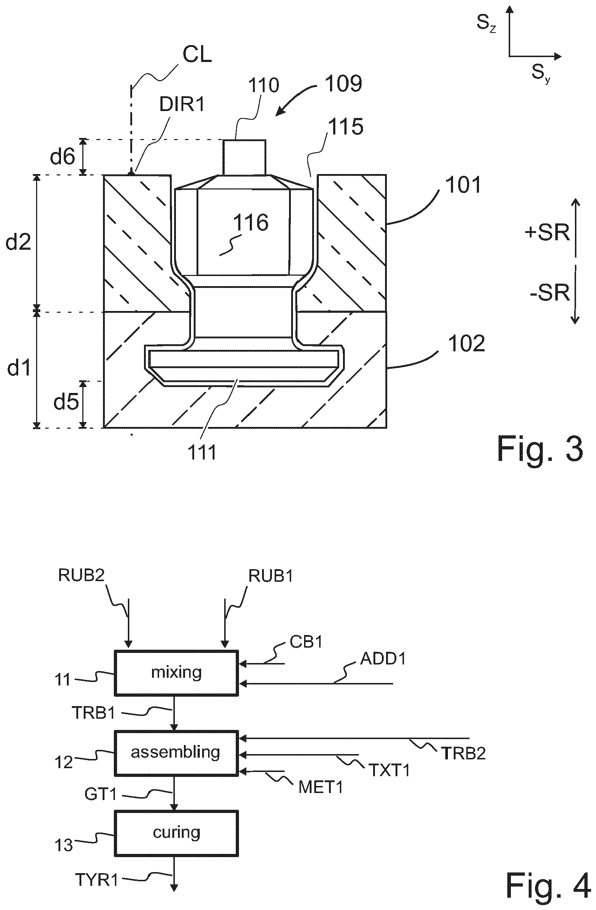

Reference is made to Figure 3. For enhanced winter grip, a pneumatic tyre may be arranged to contain a plurality of studs 109, which are designed to contact the driving surface when the tyre is rolling. The pneumatic tyre may therefore comprise a plurality of stud holes 115 which may have been molded into the tread layer 101 during vulcanization or curing or shaped after curing, such that studs may be installed into the stud holes 115. The stud holes 115 may extend to the underlayer 102. A stud 109 comprises a body 116 and a pin 110. The body 116 of the stud 109 is typically made or metal, such as steel or aluminium. The pin 110 typically comprises hard metal or ceramic. Typically the protrusion d6 of the pin 110 from the surface of the tread layer 101, in a radial direction +SR, is between 0.6 mm and 2.0 mm, more preferably between 0.7 mm and 1.6 mm, and most preferably between 0.8 mm and 1.4 mm, when measured from an inflated unused tyre. The body 116 further comprises a bottom flange 111, which may be made of the same material as the body. A stud 109 is arranged into the pneumatic tyre TYR1 such that the body 116 extends through the tread layer 101 in the longitudinal direction of the stud 109, in a direction substantially parallel to the radial direction +SR. The pin 110 is arranged to protrude above the surface of the tread layer 101 in a direction substantially parallel to the radial direction +SR. The bottom flange 111 is arranged to penetrate into the layer beneath the tread layer 101. Advantageously, the bottom flange 111 is arranged to penetrate into the underlayer 102 such that at least part of the underlayer 102 remains beneath the plurality of studs 109 in the radial direction +SR substantially perpendicular to the direction of rotation DIR1 of the tyre. Advantageously, the underlayer 102 is a thermally adaptive underlayer. When the underlayer 102 is thermally adaptive, the underlayer may be arranged to act as a dampener for the stud, such that the dynamic impact caused by the stud may be reduced when the driving surface is sufficiently warm, since the dampening correlates with the temperature experienced by the thermally adaptive underlayer, when the tyre is in motion. For instance, when the temperature experienced by the thermally adaptive underlayer 102 decreases below 295°K, preferably below 288°K, the dynamic stiffness of the underlayer 102 may begin to increase, such that the support provided by the underlayer 102 towards the stud 109 is increased and the underlayer 102 increasingly resists the penetration of the stud 109 in a radial direction -SR substantially perpendicular to the direction of rotation DIR1 of the tyre. When the temperature experienced by the thermally adaptive underlayer 102 increases again, an inverse effect occurs, wherein the underlayer 102 begins to demonstrate more elastic behavior, such that the support provided by the underlayer 102 to the stud 109 is reduced and the underlayer 102 increasingly permits the penetration of the stud 109 in a radial direction -SR substantially perpendicular to the direction of rotation DIR1 of the tyre. Advantageously, the pneumatic tyre TYR1 comprises a thermally adaptive underlayer 102 having a thickness d1 and a plurality of studs 109 and arranged to protrude from the surface of the tread layer 101 such that at least part of the thickness d1 of thermally adaptive underlayer 102 extends beneath the bottom flange 111 of the studs 109. Preferably, the part of the thickness of thermally adaptive underlayer 102 which extends beneath the bottom flange 111 has a thickness d5, which is advantageously equal to or larger than the amount of protrusion d6 of the pin 110 from the surface of the tread layer 101 in a direction perpendicular to the direction of rotation of the tyre DIR1. Advantageously, the studs 109 are arranged such that a thickness d5 of the underlayer beneath the studs is at least 0.3 mm, when determined at locations beneath the bottom flanges 111 of the studs 109, when the stud is in a rest position, that is, when the stud is not subjected to external forces, such as pressure caused by the driving surface. When the underlayer 102 is a layer directly beneath the tread layer 101, without an intermediate layer between the underlayer 102 and the tread layer 101, the thickness d5 of the underlayer 1 beneath the studs is preferably at least 0.5 mm, when determined at locations beneath the bottom flanges 111 of the studs 109, as disclosed above.

*A method for manufacturing tyre with a thermally adaptive underlayer*

Reference is made to Figure 4, which illustrates a method for manufacturing a pneumatic tyre TYR1 comprising a thermally adaptive underlayer. As explained above, a thermally adaptive underlayer is based on a selection of first elastomer RUB1 and a second elastomer RUB2, which have distinct glass transition temperatures sufficiently far apart from each other and which have low miscibility towards each other, such that a polymer system is obtained, wherein the two elastomers remain at least partially separated into different phases, and wherein each phase exhibits distinct and different domain morphologies, which have distinct characteristics that are dependent of the elastomers in the respective phases.

Particularly preferred elastomers RUB1, RUB2 in the context of this description comprise natural rubber and solution-polymerized styrene-butadiene rubber, which exhibit low miscibility towards each other such that a polymer system may be obtained, which contains separate domains, wherein the NR can be arranged to remain as a continuous matrix while the S-SBR is separated into discrete zones of S-SBR amidst the continuous NR matrix. By selecting natural rubber and solution-polymerized styrene-butadiene rubber which have distinct glass transition temperatures that are sufficiently far apart from each other, it is possible to prepare a thermally adaptive rubber component TRB1 wherein the polymer system comprises non-uniform characteristics, such as bimodal viscoelastic behaviour as a function of temperature, which can be determined as tangent delta peaks in a rubber sample in a DMTA. Advantageously, the first elastomer is S-SBR having a first glass transition temperature $Tg_1$ at a temperature which is in the range of 235°K to 260°K, preferably in the range of 240°K to 255°K, and the second elastomer is natural rubber having a second glass transition temperature $Tg_2$ at a temperature which is less than 215°K, such that the difference $\Delta Tg$ between the first glass transition temperature $Tg_1$ and the second glass transition temperature $Tg_2$ is equal to or larger than 20°K. A glass transition temperature within this description refers to a derivative signal determinable by DSC under nitrogen atmosphere, in a temperature range of 123°K to 373°K, at a linear rate of 10°K/min according to in accordance with ISO 11357-2. Advantageously, the S-SBR has a styrene content which is in the range of 25 to 45 % by mass, preferably 27 to 40 % by mass, and a vinyl content which is in the range of 33 to 65 mol-%, preferably 38 to 61 mol-% relative to the butadiene, the contents determinable by 1H-NMR method in accordance with ISO 21561-1:2015. The relative content of the monomers in the S-SBR may be used to adjust the properties of the polymer and its miscibility towards NR. Further, by adjusting the amount of S-SBR and the NR in the polymer system, the basic characteristics of the thermal adaptivity may be controlled. Advantageously, the ratio of SBR to NR in the thermally adaptive rubber component is between 4:1 and 1:4, preferably between 2:1 and 1:2. The thermally adaptive rubber component TRB1 may contain the S-SBR in an amount equal to or higher than 20 parts per hundred rubber, preferably in an amount equal to or higher than 30 parts per hundred rubber, such as in the range of 20 to 80 parts per hundred rubber. The thermally adaptive rubber component may contain the NR in an amount equal to or higher than 20 parts per hundred rubber, preferably in an amount equal to or higher than 30 parts per hundred rubber, such as in the range of 20 to 80 parts per hundred rubber.

The temperature ranges where the glass transitions of the thermally adaptive rubber component TRB1, which contains the polymer system as disclosed above, may be adjusted by admixing further substances, such as an additive ADD1 or a further elastomer. A preferred further elastomer is polybutadiene rubber, denoted hereafter as BR, which is a synthetic rubber which has been polymerized from butadiene monomers. BR which is highly miscible with NR may be mixed into the same phase, when preparing a polymer system for a thermally adaptive rubber component. BR is produced in grades having a very low glass transition temperature that is less than the glass transition temperature of the NR, whereby a mixture of NR and BR, which are in the same phase, may be used to provide better low-temperature flexibility for the polymer system in the thermally adaptive rubber component TRB1. Advantageously, the thermally adaptive rubber component TRB1 contains polybutadiene rubber in an amount in the range of 0 to 30 parts per hundred rubber, wherein the polybutadiene rubber is cis-1,4- polybutadiene, trans-1,4-polybutadiene, or any combination of these, and wherein the polybutadiene rubber has a glass transition temperature at a temperature which is in the range of 160°K to 193°K, preferably in the range of 163°K to 178°K, the glass transition temperature being lower than the glass transition temperature of the natural rubber and referring to a derivative signal determinable by DSC under nitrogen atmosphere, in a temperature range of 123°K to 373°K, at a linear rate of 10°K/min according to in accordance with ISO 11357-2.

Additive ADD1, such as a resin that has a high miscibility towards the S-SBR, may be used to further adjust the temperature ranges where the glass transitions of the thermally adaptive rubber component TRB1, which contains the polymer system disclosed above, occurs. Advantageously, a hydrocarbon resin, which is used as an additive to adjust the temperature ranges where the glass transitions of the thermally adaptive rubber component TRB1 takes place, is selected from the group consisting of C9 aromatic resin, phenol-based resin, terpene resin, terpene phenol resin, rosin derived resins and copolymers may be used. The resin may further be any combination of the list above or a modification thereof. Advantageously an additive is selected from the group of resins disclosed above, wherein the resin has a glass transition temperature that is higher than the glass transition temperature of the S-SBR. Preferably the additive ADD1 is a hydrocarbon resin as disclosed above, having a glass transition temperature above the freezing temperature of water, such as equal to or higher than 290°K, such as in the range of 290°K to 330°K. Most preferably the additive is an aromatic hydrocarbon resin having a glass transition temperature equal to or higher than 300°K, such as in the range of 300°K to 330°K, most preferably in the range of 308°K to 328°K, the glass transition temperature referring to a derivative signal determinable by DSC under nitrogen atmosphere, in a temperature range of 123°K to 450°K, at a linear rate of 10°K/min in accordance with ASTM D6604. The addition of a resin as disclosed above to the polymer system results into a shift of the glass transition of the S-SBR phase, determinable by the DSC. When the glass transition temperature of the resin is higher than the glass transition temperature of the S-SBR, the shift is directed toward higher temperatures. The shift may be characterized as the difference $\Delta T$ of the temperatures at the maximum tan $\delta$ between the polymer system with the resin and the polymer system without the resin. Advantageously, the thermally adaptive rubber component TRB1 contains the resin in an amount in the range of 1 to 30 parts per hundred rubber.

The strength and longevity characteristics of the thermally adaptive rubber component TRB1 may be further controlled by adjusting the amount and type of reinforcing filler materials CB1 used therein. A rubber composition suitable for a thermally adaptive underlayer component advantageously contains a reinforcing filler material in an amount equal to or higher than 30 parts per hundred rubber, such as in the range of 35 to 80 parts per hundred rubber, preferably in an amount in the range of 35 to 65 parts per hundred rubber, most preferably in an amount in the range of 40 to 50 parts per hundred rubber. Reinforcing filler materials CB1 are generally admixed with the elastomers as solid particles. When the strength of the thermally adaptive rubber component TRB1 is increased by means of fillers, its ability to transmit forces through the tread area of the tyre is also improved.

Advantageously, the rubber composition suitable for a thermally adaptive underlayer component, as disclosed above, contains reinforcing filler material CB1 which is carbon black that has a specific surface area in the range of 20 to 140 $m^2$/g, preferably carbon black that has a specific surface area in the range of 25 to 100 $m^2$/g, most preferably a carbon black that has a specific surface area in the range of 60 to 100 $m^2$/g, based on multipoint nitrogen adsorption, determinable according to ASTM D6556-19a of carbon black type filler material. The rubber composition suitable for a thermally adaptive underlayer component, as disclosed above, may further or in alternative contain reinforcing filler material CB1 which is silica that has a specific surface area in the range of 70 to 250 $m^2$/g, preferably silica that has a specific surface area in the range of 120 to 220 $m^2$/g, most preferably precipitated amorphous silica, such as HDS silica or RHA silica, that has a specific surface area in the range of 140 to 200 $m^2$/g, based on multipoint nitrogen adsorption, determinable according to ASTM D1993 (2018).

Compared with carbon black having similar specific surface area, silica as such provides lower degree of reinforcement because it contains a large number of silanol groups (-OH) on the surface, thus making it highly polar and less compatible with NR and S-SBR. To improve the reinforcing efficiency of silica to the polymer system, bifunctional coupling agents are typically used, such as a silane coupling agent, which bond both to the silica as well as to the polymer chains. Typically the bifunctional coupling agents comprise a hydrolysable alkoxy group and an organo-functional group, wherein the former is arranged to react chemically with the silanol groups on silica surface while the latter is more compatible with rubbers and can also participate in curing by forming covalent bonds with rubbers.

A thermally adaptive rubber component TRB1 is manufactured by mixing 11 elastomers RUB1, RUB2, reinforcing filler material, additives, and curing agents together mechanically such that a rubber composition comprising a polymer system is obtained. The additives and curing agents comprise substances commonly used for vulcanization of rubber compositions, such as oil, sulphur, peroxides, and metal oxides. Additives include oils and other chemicals typically used as processing aids when manufacturing the rubber composition. The curing agents are used to facilitate covalent bonding of the rubber composition into a cross-linked rubber component, which contains carbon-carbon, carbon-sulphur, and sulphur-sulphur linkages between the molecules. The curing agents may contain vulcanization accelerators and retarders. Chemicals typically used in manufacturing rubber compositions include stearic acid, zinc oxide, abbreviated as ZnO, oil, such as treated distillate aromatic extracts, abbreviated as TDAE, N-(1,3-Dimethylbutyl)-N'-phenyl-p-phenylenediamine, abbreviated as 6PPD, 2,2,4-Trimethyl-1,2-dihydroquinoline, abbreviated as TMQ, N-Cyclohexyl-2-benzothiazole sulfenamide, abbreviated as CBS and Zinc bis(dibenzyldithiocarbamate), abbreviated as ZBEC. The amount of additives and curing agents used for manufacturing rubber compositions for a pneumatic tyre are known in the field and typically vary from less than one part per hundred rubber to a few parts per hundred rubber.

A rubber composition for a thermally adaptive underlayer may comprise additives and curing agents, for instance, in amounts as explained below:

- oil, such as TDAE, in the range of 0 to 30 phr,
- antidegradants in the range of 0 to 10 phr,
- ZnO in an amount in the range of 2 to 4 phr,
- stearic acid in an amount in the range of 1 to 3 phr, and
- curing agents, which comprise vulcanization accelerators in the range of 1 to 5 phr, and sulphur in an amount in the range of 1 to 5 phr.

The mixing 11 of a rubber composition suitable for a thermally adaptive underlayer component is advantageously a mechanical step-wise mixing process which is typically performed in a mixer, such as an internal batch mixer, wherein first at least part or all of the elastomers are added and mixed together, such that a polymer system is obtained. In a second step, at least part or all of the filler-type material, such as carbon black, silica and silane, oil and additives is added and mixed, such that a rubber composition is obtained. The selection of batch temperature during the mixing, the mixing power, step time and rotor speed of the used mixer may be defined based on the target specifications for the rubber composition and are well known in the field. Typical mixing times used per step may vary from less than a minute to a few minutes or longer, as necessary, depending of the compositions. When silica and silane is added into the polymer system, the obtained rubber composition is subsequently heated, such that a silanization reaction takes place. Silanization is typically performed in a temperature in the range of 416-433°K for 2-10 minutes, the reaction conditions based on the selected silane and/or silica. The curing agents are added and mixed later, in a final mixing step, at a temperature below 373°K.

The shaping of the rubber composition into a thermally adaptive rubber component TRB1 may involve extrusion, wherein the rubber composition is forced through a die opening and carried by means of a barrel to a die. Multiple barrels may be used for feeding a single die, thereby allowing co-extrusion of different rubber composition into a die and the simultaneous forming of multiple rubber components, such as a tread layer component TRB2 and a thermally adaptive underlayer component TRB1. Thus, the rubber components may be arranged onto a green tyre such that the thermally adaptive underlayer component TRB1 becomes positioned between a textile component TXT1 and a tread layer. The assembling 12 of a green tire GT1 is well known in the field. The assembly 12 typically takes place on a rotating drum, wherein the carcass parts of the pneumatic tyre, including body ply 106 that is a layer of reinforcing textile component are assembled first and the metal belts MET1 and the rubber components TRB1, TRB2, including the tread area components, are assembled later, in a second stage, prior to inserting the green tyre GT1 into a mould for curing 13.

During curing 13, the mould is heated, typically by means of super-heated steam or hot water, such that a rapid rise in temperature and even temperature distribution is obtained for the rubber components of the green tyre GT1. When the curing is a vulcanization process, the green tyre GT1 is typically heated into a temperature which in the range of 423°K to 463°K. As disclosed above, during a vulcanization reaction the curing agents and sulphur present in the rubber components enable cross-linking reactions to take place, which bond the tyre components firmly together. The curing times, temperatures and pressures are known in the field and typically vary, depending of the rubber compounds chosen for the pneumatic tyre. Standard passenger car tyres are typically cured from few minutes up to half an hour, such as in the range of 5 to 30 minutes.

Comparative experimental studies reported hereafter explain the benefits of the description above in more detail.

*Example 1 - Preparation of a thermally adaptive rubber component comprising phase separated elastomers*

Two underlayer rubber components for a pneumatic tyre, denoted as components R1 and R2, were prepared in a conventional manner from rubber mixtures, according to the general formulae presented in Table 1 (below). The rubber component R1 comprised emulsion-polymerized styrene-butadiene rubber (E-SBR) which had a 23 % by mass styrene content and 16 mol-% vinyl content relative to the butadiene, determined by 1 H-NMR (ISO 21561-1 :2015), natural rubber (NR) and polybutadiene rubber (BR) in the polymer system. The rubber component R1 represented a conventional underlayer. The rubber component R2 was a thermally adaptive underlayer component, which comprised solution-polymerized styrene-butadiene rubber (S-SBR) which had substantially equal styrene and vinyl contents. The rubber component R2 comprised S-SBR which had a 39 % by mass styrene content and 39 mol-% vinyl content relative to the butadiene, determined by 1H-NMR (ISO 21561-1 :2015), natural rubber (NR) and butadiene rubber (BR) in the polymer system, and wherein the composition further contained a resin that had a glass transition temperature of 312°K and a high miscibility with the S-SBR. The NR and the S-SBR in component R2 were selected based on their characteristics, such that the S-SBR had a glass transition temperature $Tg_1$, which was in the range of 245°K to 250°K, while the NR had a glass transition temperature $Tg_2$ which was less than 215°K, the glass transition temperatures $Tg_1$, $Tg_2$ referring to a derivative signal determinable by DSC under nitrogen atmosphere, in a temperature range of 123°K to 373°K, at a linear rate of 10°K/min according to in accordance with ISO 11357-2. The S-SBR and NR had low miscibility towards each other, which was observed as a phase separation of the elastomers in subsequent DMTA of a rubber component R2. The principal elastomers of the polymer system therefore had a difference in their glass transition temperatures equal to or larger than 20°K and a low miscibility towards each other. The BR was miscible with the NR and present in the same phase with the NR. A high structure carbon black (N375 grade) was used as reinforcing filler, having a specific surface area in the range of 80-100 $m^2$/g, based on multipoint nitrogen adsorption (ASTM D6556-19a).

Both rubber compositions were prepared by means of a stepwise mixing process. A2L-internal mixer (Krupp Elastomertechnik GK 1,5 laboratory mixer) was used to add the compounds listed in Table 1. In a first step, the polymers (NR, BR, and S-SBR or E-SBR) were added into a mixing chamber of the internal mixer and mixed for 40 seconds. In the second step, part (1/3) of the carbon black and the chemicals (resin, ZnO, stearic acid, 6PPD, TMQ) were added and mixed for 60 seconds. In the third step, the remaining part (2/3) of the carbon black and oil (TDAE) were added and mixed until the temperature in mixing chamber received 423°K degrees (90 seconds). Subsequently, the mixed material, denoted as masterbatch, was dropped from the mixing chamber. After cooling down, the final mixing step was performed by adding curing agents (sulphur, CBS, ZBEC) to the masterbatch at 368°K and mixing for 50 seconds.

Two series were prepared from each rubber composition, wherein the first series was used to prepare underlayer rubber components R1 and R2 having a thickness of 5 millimeters, which were subsequently vulcanized (423°K, 150 bar). The optimum vulcanization time of t90 (at 423°K) for each component was determined with a moving die rheometer according to ASTM D5289/1995. A vulcanization time of t90 plus 5 min was used for subsequent studies, wherein the loss tangent (E''/E') and the dynamic stiffness (E*) onset point temperature was determined from cylindric samples in compression, as a function of temperature, using a DMTA. The second series was used in a study, wherein each of the underlayer rubber components R1 and R2 were assembled into a pneumatic tyre, beneath a tread layer. In the second series, the same construction and curing conditions were used when preparing both pneumatic tyres P1 and P2, hence the only distinguishing feature was in the composition of the underlayer.

In both series, cylindric samples were prepared from the rubber components R1 and R2 and pneumatic tyres P1 and P2, three independent sample from each. From the rubber components R1 and R2, cylindric samples having a diameter of 10 mm and a height of 10 mm were prepared. From the pneumatic tyres P1 and P2, cylindric samples having a diameter of 4.5 mm and a height of 5.0 mm were prepared. When preparing the samples from the pneumatic tyres P1 and P2, the underlayer was separated from the sample, which was obtained from the pneumatic tyre by means of a hollow cylindrical sampling device. The values for the tangent delta E''/E' and the dynamic stiffness E* onset point temperature were determined as arithmetic average values of the measurements.

This enabled an experimental study, wherein a thermally adaptive underlayer could be compared to a conventional underlayer, both when cured as individual components and when cured as part of a pneumatic tyre.

Table 1. Formulae used for preparing rubber components R1 and R2 for the study.

| Raw material | R1 amount (phr) | R2 amount (phr) |
|---|---|---|
| NR | 40 | 40 |
| S-SBR (39% vinyl, 39% styrene) | 0 | 40 |
| E-SBR (16% vinyl, 23% styrene) | 40 | 0 |
| BR | 20 | 20 |
| TDAE | 6 | 6 |
| Carbon black (N375) | 57 | 57 |
| Resin (Tg = 312 °K) | 0 | 30 |
| ZnO | 3 | 3 |
| Stearic acid | 2 | 2 |
| 6PPD | 1 | 1 |
| TMQ | 1 | 1 |
| Sulphur (rubber grade) | 1 | 1 |

(continued)

| Raw material | R1 amount (phr) | R2 amount (phr) |
|---|---|---|
| CBS | 3 | 3 |
| ZBEC | 0.2 | 0.2 |

*Example 2 - Loss tangent (E''/E') of a thermally adaptive rubber component comprising phase separated elastomers*

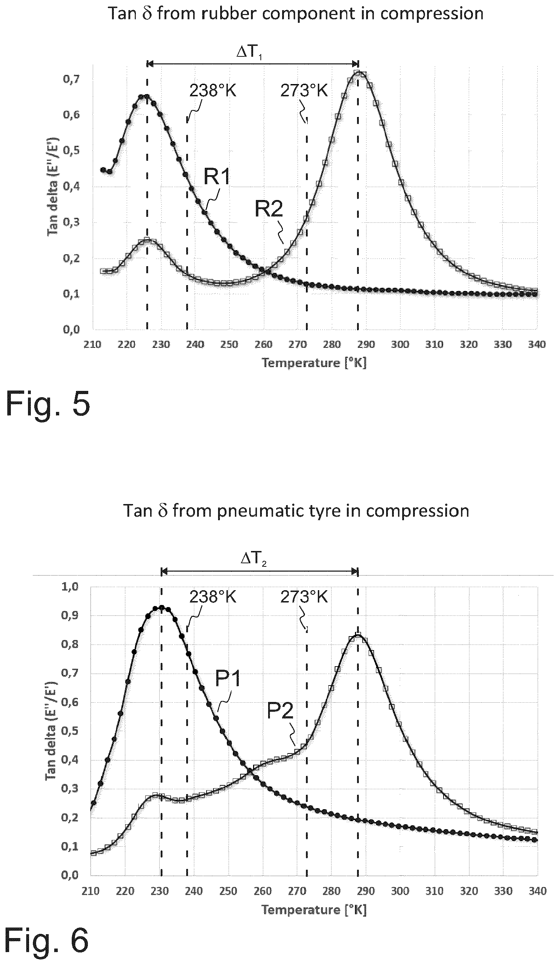

Reference is made to Figures 5 and 6. Tangent delta (E''/E') was determined from the cylindric samples R1, R2, P1 and P2 disclosed above, in compression, using a DMTA and a temperature range from 213°K to 343°K, a heating rate of 2°K/min and a 10Hz frequency, in accordance with ISO 4664-1 (2010). The tangent delta, also referred to as loss factor or $\tan\delta$, describes the viscoelastic behaviour of the material as a ratio between the energy loss and stored during deformation.

In Figures 5 and 6, the horizontal axis represents the temperature in degrees of Kelvin (°K), while the vertical axis represents the magnitude of $\tan\delta$, which is the ratio of the loss modulus E'' to the storage modulus E'. The dashed vertical lines illustrate temperatures wherein either a $\tan\delta$ peak maximum has been observed (outmost dashed vertical lines) or which define temperatures of relevance for the thermal adaptivity of an underlayer (innermost dashed vertical lines).

Reference is made Figure 5, which shows that a single $\tan\delta$ peak was detected in the rubber component R1 in a temperature in the range of 213°K to 238°K, R1 representing a conventional underlayer. The $\tan\delta$ peak maximum for R1 was detected in a temperature of 226°K. The detection of a $\tan\delta$ peak indicates that a glass transition had taken place in the sample. However, the results also demonstrate that in the rubber component R2, which was a thermally adaptive underlayer component and comprised natural rubber (NR), butadiene rubber (BR), and solution-polymerized styrene-butadiene rubber (S-SBR) which had low miscibility towards the natural rubber in the polymer system, two distinct $\tan\delta$ peaks were detected. The first $\tan\delta$ peak was detected in the rubber component R2 in a temperature in the range of 213°K to 238°K, while a second $\tan\delta$ peak was detected in a temperature in the range of 273°K to 303°K. The first $\tan\delta$ peak maximum in the rubber component R2 was detected in a temperature of 226°K, while the second $\tan\delta$ peak maximum in the rubber component R2 was detected in a temperature of 288°K. In the rubber component R2, the two peak maximums were thus separated by a temperature difference $\Delta T_1$ of 62°K. In the rubber component R2, one peak maximum was thus above 273°K and another peak maximum was below 238°K, and the two peak maximums were thus separated by at least 35°K. As a $\tan\delta$ peak maximum was detected in the same temperature of 226°K in both samples R1 and R2, the experimental results of Figure 5 also demonstrate the low miscibility of the NR and the S-SBR in sample R2, as a separate $\tan\delta$ peak maximum was detected in a temperature of 288°K in the sample R2.

Table 2 below shows the determined $\tan\delta$ values at various temperatures in samples R1 and R2. The data from the rubber component R2 demonstrates that the thermally adaptive underlayer produces two peak maximums at temperatures separated by at least 35°K, wherein one peak maximum is above 273°K and another peak maximum is below 238°K.

Table 2. Determined $\tan\delta$ at different temperatures in samples R1 and R2.

| Temp | (°K) | 213 | 226 | 238 | 261 | 273 | 288 | 303 |
|---|---|---|---|---|---|---|---|---|
| **R1 $\tan\delta$** | (E''/E') | 0.44 | 0.65 | 0.43 | 0.16 | 0.13 | 0.11 | 0.11 |
| **R2 $\tan\delta$** | (E''/E') | 0.16 | 0.25 | 0.16 | 0.16 | 0.31 | 0.72 | 0.37 |

Reference is made Figure 6, which shows the results from samples P1 and P2. In a manner similar to the rubber components R1 and R2, also the samples derived from pneumatic tyre underlayers demonstrate the presence of two distinct $\tan\delta$ peak in the sample P2 which comprises a thermally adaptive underlayer component, whereas in the only a single $\tan\delta$ peak in the sample P1 was detected. The $\tan\delta$ peak maximum was shifted few degrees higher, in both samples P1 and P2, which was contemplated to be due to the curing of the samples together with other components of the pneumatic tyres. The same findings as were disclosed above for the samples R1 and R2 representing the underlayer rubber components, apply for the pneumatic tyre samples P1 and P2. The first $\tan\delta$ peak was detected in the sample P2 in a temperature in the range of 213°K to 238°K, while a second $\tan\delta$ peak was detected in a temperature in the range of 273°K to 303°K. The first $\tan\delta$ peak maximum in the sample P2 was detected in a temperature of 231°K, while the second $\tan\delta$ peak maximum in the sample P2 was detected in a temperature of 288°K. In the sample P2, the two peak maximums were thus separated by a temperature difference $\Delta T_2$ of 57°K. The sample P2, thus confirms the results obtained from the rubber component R2, that the thermally adaptive underlayer produces two peak maximums at temperatures separated by at least 35°K, wherein one peak maximum is above 273°K and another peak maximum is below 238°K, and wherein the first peak maximum is at a temperature in the range of 273°K to 303°K, preferably at a temperature in the range of 273°K to 290°K and the second peak maximum is at a temperature in the range of 213°K to 238°K.

Table 3 below shows the determined tanδ values at various temperatures in samples P1 and P2. The data from the sample P2 demonstrates that the thermally adaptive underlayer produces two peak maximums at temperatures separated by at least 35°K, wherein one peak maximum is above 273°K and another peak maximum is below 238°K.

Table 3. Determined tanδ at different temperatures in samples P1 and P2.

| Temp | (°K) | 213 | 229 | 231 | 238 | 256 | 273 | 288 | 303 |
|---|---|---|---|---|---|---|---|---|---|
| **P1 tan**δ | (E"/E') | 0.67 | 0.92 | 0.93 | 0.77 | 0.35 | 0.23 | 0.19 | 0.16 |
| **P2 tan**δ | (E"/E') | 0.17 | 0.28 | 0.27 | 0.27 | 0.35 | 0.48 | 0.83 | 0.43 |

*Example 3 - Dynamic stiffness (E\*) of a thermally adaptive rubber component comprising phase separated elastomers*

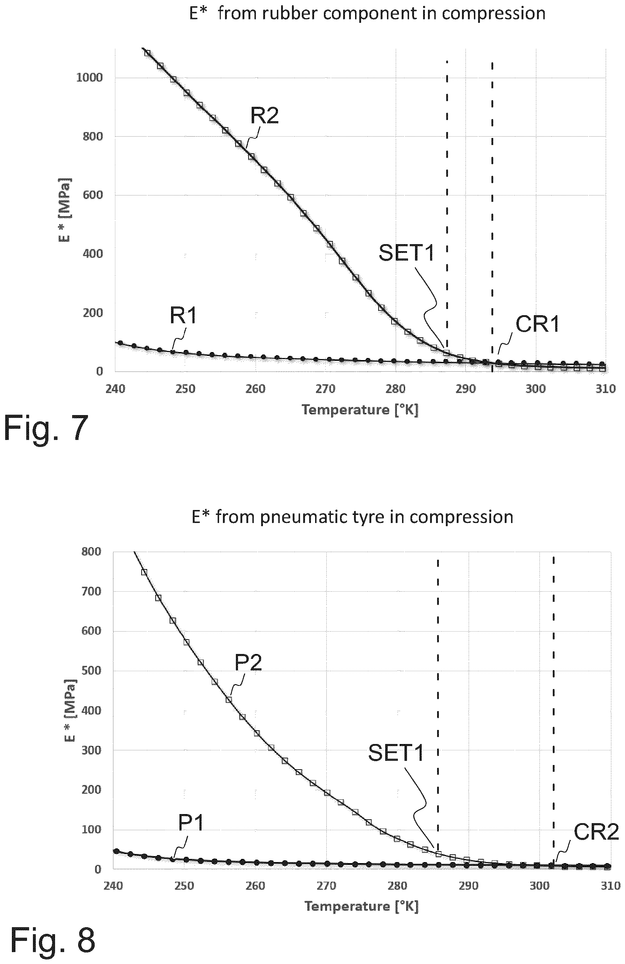

Reference is made to Figures 7 and 8. A temperature-dependent dynamic stiffness (E\*) was determined from the cylindric samples R1, R2, P1 and P2 disclosed above, in compression, using a DMTA and a temperature range from 213°K to 343°K, a heating rate of 2°K/min and a 10Hz frequency, in accordance with ISO 4664-1 (2010). The dynamic stiffness E\*, also referred to as dynamic modulus or complex modulus of elasticity, describes the viscoelastic behaviour of the material as a ratio of mechanical stress to the relative deformation.

In Figures 7 and 8, the horizontal axis represents the temperature in degrees of Kelvin (°K), while the vertical axis represents the dynamic stiffness E\* in units of Megapascal (MPa). The square of dynamic stiffness is equal to the sum of the squares of storage modulus and the loss modulus, i.e.

$$(E^*)^2 = (E')^2 + (E'')^2,$$

whereby dynamic stiffness E\* can also be expressed as $E^* = \sqrt{((E')^2 + (E'')^2)}$, wherein the E' represents the storage modulus and the E" represents the loss modulus. The dashed vertical line on the right illustrates the location of the cross-over temperature CR1, CR2, wherein the E\* is equal in both samples. The dashed vertical line on the left illustrates the location of the dynamic stiffness E\* onset point temperature SET1 of the thermally adaptive underlayer component. The onset point temperature SET1, as used herein, refers to the temperature at an intersection, wherein two imaginary lines parallel to the modulus curve meet, the first imaginary line being substantially parallel to the section of the modulus curve at the temperature range above the onset point temperature, wherein the modulus remains relatively stable, and the second imaginary line being substantially parallel to the section of the modulus curve at the temperature range below the onset point temperature, wherein the dynamic stiffness steadily increases.

Reference is made Figure 7, which shows that in the rubber component R1 the dynamic stiffness E\* remains relatively stable throughout the analyzed temperature range, and demonstrates only moderate increase below the cross-over temperature CR1 at 293°K. In contrast, in the rubber component R2 the dynamic stiffness E\* increases throughout the analyzed temperature range, and demonstrates a rapid increase below the onset point temperature SET1 at 288°K.

Table 4 below shows the determined dynamic stiffness E\* values for the samples R1 and R2 at each indicated temperature.

Table 4. E\* (MPa) at different temperatures in samples R1 and R2.

| Temp | (°K) | 250 | 260 | 273 | 285 | 288 | 293 | 299 | 303 |
|---|---|---|---|---|---|---|---|---|---|
| **R1** | (E\*) | 63 | 49 | 39 | 32 | 31 | 31 | 27 | 26 |
| **R2** | (E\*) | 950 | 709 | 377 | 82 | 56 | 31 | 18 | 15 |

Reference is made Figure 8, which shows the dynamic stiffness E\* results from samples P1 and P2. In a manner similar to the rubber components R1 and R2, also the samples derived from pneumatic tyre underlayers demonstrate the presence of a rapid dynamic stiffness E\* increase in the sample P2 which comprises a thermally adaptive underlayer component. Such increase rapid dynamic stiffness E\* was not detected in the sample P1. In the sample P1, the dynamic stiffness E\* remains relatively stable throughout the analyzed temperature range, and demonstrates only moderate increase below the crossover temperature CR1 at 299°K. In contrast, in the rubber component R2 the dynamic stiffness E\* increases throughout the analyzed temperature range, and demonstrates a rapid increase below the onset point temperature SET1 at 290°K.

Table 5 below shows the determined dynamic stiffness E* values for the samples P1 and P2 at each indicated temperature.

Table 5. E* (MPa) at different temperatures in samples P1 and P2.

| Temp | (°K) | 250 | 260 | 273 | 285 | 288 | 293 | 299 | 303 |
|---|---|---|---|---|---|---|---|---|---|
| **P1** | (E*) | 23 | 17 | 13 | 11 | 11 | 10 | 10 | 9 |
| **P2** | (E*) | 573 | 344 | 157 | 45 | 30 | 15 | 10 | 8 |

The same findings as were disclosed above for the samples R1 and R2 representing the underlayer rubber components, apply for the pneumatic tyre samples P1 and P2. The thermally adaptive underlayer produces a rapid increase of dynamic stiffness. The finding further indicates that in temperatures below the freezing temperature of water the sample P2 experiences less energy dissipation and is thus more resilient.

The findings of the dynamic mechanical thermal analysis presented above, in respect of the presence of two distinct tanδ peak, and the rapidly rising dynamic stiffness E*, demonstrate of significant advantages which a thermally adaptive underlayer component underlayer positioned beneath a tread layer can provide for a pneumatic tyre.

For the person skilled in the art, it will be clear that modifications and variations of the pneumatic tyre and the method are perceivable. The figures are meant to be illustrative and to be read together with the description above. Any particular examples described above are illustrative only and not meant to limit the scope of the invention, which is defined by the appended claims.

**Claims**

1.  A pneumatic tyre comprising an underlayer positioned between a textile component and a tread layer, wherein the underlayer is a thermally adaptive rubber component, which contains reinforcing filler material, additive, curing agents and a polymer system comprising

    - a first elastomer having a first glass transition temperature and a second elastomer having a second glass transition temperature the first and the second elastomer having low miscibility towards each other,

    and wherein

    - the thermally adaptive rubber component contains the first elastomer in an amount in the range of 20 to 80 parts per hundred rubber and the second elastomer in an amount equal to or higher than 20 parts per hundred rubber,
    - the first elastomer is solution-polymerized styrene-butadiene rubber,
    - the second elastomer is natural rubber, and
    - the difference between the first glass transition temperature and the second glass transition temperature is equal to or larger than 20°K,
    the glass transition temperature referring to derivative signal determinable by differential scanning calorimetry under nitrogen atmosphere, in a temperature range of 123°K to 373°K, at a linear rate of 10°K/min according to in accordance with ISO 11357-2.

2.  A method for manufacturing a pneumatic tyre comprising a thermally adaptive underlayer, the method comprising

    - selecting a first elastomer having a first glass transition temperature and a second elastomer having a second glass transition temperature which have low miscibility towards each other,
    - mixing the elastomers, reinforcing filler material, additive, and curing agents together mechanically such that a rubber composition comprising a polymer system is obtained,
    - shaping the rubber composition into a rubber component suitable for an underlayer of a pneumatic tyre,
    - arranging the rubber component onto a green tyre such that the rubber component becomes positioned as an underlayer between a textile component and a tread layer, and
    - curing the green tyre,
    thereby obtaining a pneumatic tyre comprising a thermally adaptive underlayer,

wherein

- the thermally adaptive rubber component contains the first elastomer in an amount in the range of 20 to 80 parts per hundred rubber and the second elastomer in an amount equal to or higher than 20 parts per hundred rubber,
- the first elastomer is solution-polymerized styrene-butadiene rubber,
- the second elastomer is natural rubber, and
- the difference between the first glass transition temperature and the second glass transition temperature is equal to or larger than 20°K,
the glass transition temperature referring to a derivative signal determinable by differential scanning calorimetry under nitrogen atmosphere, in a temperature range of 123°K to 373°K, at a linear rate of 10°K/min according to in accordance with ISO 11357-2.

3. The pneumatic tyre according to claim 1 or the method according to claim 2, wherein the solution-polymerized styrene-butadiene rubber has

- a styrene content which is in the range of 25 to 45 % by mass, preferably 27 to 40 % by mass and
- a vinyl content which is in the range of 33 to 65 mol-%, preferably 38 to 61 mol-% relative to the butadiene,

the contents determinable by 1H-NMR method in accordance with ISO 21561-1:2015.

4. The pneumatic tyre or the method according to any of the previous claims, wherein

- the solution-polymerized polystyrene-butadiene rubber has a glass transition temperature at a temperature which is in the range of 235°K to 260°K, preferably in the range of 240°K to 255°K, and
- the natural rubber has a glass transition temperature at a temperature which is less than 215°K,
- the glass transition temperature referring to a derivative signal determinable by differential scanning calorimetry under nitrogen atmosphere, in a temperature range of 123°K to 373°K, at a linear rate of 10°K/min according to in accordance with ISO 11357-2.

5. The pneumatic tyre or the method according to any of the previous claims, wherein the thermally adaptive underlayer component contains the reinforcing filler material in an amount equal to or higher than 30 parts per hundred rubber, such as in the range of 35 to 80 parts per hundred rubber, preferably in an amount in the range of 35 to 65 parts per hundred rubber, most preferably in an amount in the range of 40 to 50 parts per hundred rubber.

6. The pneumatic tyre or the method according to any of the previous claims, wherein the reinforcing filler material is

- carbon black that has a specific surface area in the range of 20 to 140 $m^2$/g, preferably carbon black that has a specific surface area in the range of 25 to 100 $m^2$/g, most preferably a carbon black that has a specific surface area in the range of 60 to 100 $m^2$/g, based on multipoint nitrogen adsorption, determinable according to ASTM D6556-19a of carbon black type filler material, or
- silica that has a specific surface area in the range of 70 to 250 $m^2$/g, preferably silica that has a specific surface area in the range of 120 to 220 $m^2$/g, most preferably precipitated amorphous silica, such as HDS silica or RHA silica, that has a specific surface area in the range of 140 to 200 $m^2$/g, based on multipoint nitrogen adsorption, determinable according to ASTM D1993 (2018), or
- any combination of these.

7. The pneumatic tyre or the method according to any of the previous claims, wherein the thermally adaptive underlayer component contains polybutadiene rubber in an amount in the range of 0 to 30 parts per hundred rubber, wherein the polybutadiene rubber is cis-1,4- polybutadiene, trans-1,4-polybutadiene, or any combination of these, and wherein the polybutadiene rubber has a glass transition temperature at a temperature which is in the range of 160°K to 193°K, preferably in the range of 163°K to 178°K, the glass transition temperature referring to a derivative signal determinable by differential scanning calorimetry under nitrogen atmosphere, in a temperature range of 123°K to 373°K, at a linear rate of 10°K/min according to in accordance with ISO 11357-2.

8. The pneumatic tyre or the method according to any of the previous claims, wherein the thermally adaptive underlayer component contains the additive in an amount in the range of 1 to 30 parts per hundred rubber, wherein said additive is a resin that has a high miscibility towards the first elastomer, the resin having been selected from the group consisting of

- aromatic resin,
- phenol-based resin,
- terpene resin,
- terpene phenol resin,
- rosin derived resins and copolymers, and
- any combination or modification of the above,

said resin having a glass transition temperature above the freezing temperature of water, preferably higher than 290°K, most preferably higher than 300°K, such as in the range of 290°K to 330°K, preferably in the range of 300°K to 330°K, most preferably in the range of 308°K to 328°K, the glass transition temperature referring to a derivative signal determinable by differential scanning calorimetry under nitrogen atmosphere, in a temperature range of 123°K to 450°K, at a linear rate of 10°K/min in accordance with ASTM D6604.

9. The pneumatic tyre or the method according to any of the previous claims, wherein the natural rubber is polyisoprene derived from a biogenic origin, such as from *Hevea, Parthenium, Landolphia,* and/or *Taraxacum* species, and wherein the natural rubber is not synthetic natural rubber.

10. The pneumatic tyre or the method according to any of the previous claims, wherein thermally adaptive underlayer has a thickness (d1) in a radial direction (+SR), which is perpendicular to the direction of rotation (DIR1) of the tyre, wherein the thickness (d1) is equal to or less than 7 mm, such as in the range of 0.5 mm to 7 mm, more preferably in the range of 1 mm to 6.5 mm, most preferably in the range of 1.5 mm to 6 mm.

11. The pneumatic tyre or the method according to any of the previous claims, wherein the pneumatic tyre comprises

- a plurality of sipes on the tread layer and/or
- a plurality of studs arranged to extend through the tread layer substantially parallel to a radial direction (+SR), which is perpendicular to the direction of rotation (DIR1) of the tyre, and wherein the thermally adaptive underlayer is in contact with the plurality of studs such that at least part of the thermally adaptive underlayer remains beneath the plurality of studs in a radial direction (+SR) substantially perpendicular to the direction of rotation (DIR1) of the tyre.

12. The pneumatic tyre or the method according to any of the previous claims, wherein the thermally adaptive underlayer produces two peak maximums at temperatures separated by at least 35°K, wherein one peak maximum is above 273°K and another peak maximum is below 238°K, when determined as a tangent delta (E"/E') from a cylindric sample in compression, using a dynamic mechanical thermal analysis and a temperature range from 213°K to 343°K, a heating rate of 2°K/min and a 10Hz frequency, in accordance with ISO 4664-1 (2010), the cylindric sample having a diameter of 4.5 mm and a height of 5.0 mm.

13. The pneumatic tyre or the method according to the previous claim, wherein the thermally adaptive underlayer produces the first peak maximum at a temperature in the range of 273°K to 290°K and the second peak maximum at a temperature in the range of 213°K to 238°K, when determined as a tangent delta (E"/E') from a cylindric sample in compression, using a dynamic mechanical thermal analysis and a temperature range from 213°K to 343°K, a heating rate of 2°K/min and a 10Hz frequency, in accordance with ISO 4664-1 (2010), the cylindric sample having a diameter of 4.5 mm and a height of 5.0 mm.

14. The pneumatic tyre or the method according to any of the previous claims, wherein the thermally adaptive underlayer comprises a dynamic stiffness (E*) onset point temperature which is in the range of 278°K to 300°K, when determined from a cylindric sample in compression, using a dynamic mechanical thermal analysis and a temperature range from 213°K to 343°K, a heating rate of 2°K/min and a 10Hz frequency, in accordance with ISO 4664-1 (2010), the cylindric sample having a diameter of 4.5 mm and a height of 5.0 mm.

15. The pneumatic tyre or the method according to any of the previous claims, wherein the thermally adaptive underlayer comprises, in parts per hundred rubber (phr),

- natural rubber in the range of 20 to 80 phr,
- solution-polymerized polystyrene-butadiene rubber in the range of 20 to 80 phr,

- polybutadiene rubber, when necessary, in the range of 0 to 30,
- reinforcing filler material in the range of 30 to 80 phr,
- resin that has a high miscibility towards the first elastomer in the range of 1 to 30 phr,
- further additives, as needed, which comprise

    ◦ oil, such as TDAE, in the range of 0 to 30 phr,
    ◦ antidegradants in the range of 0 to 10 phr,
    ◦ ZnO in an amount in the range of 2 to 4 phr,
    ◦ stearic acid in an amount in the range of 1 to 3 phr, and

- curing agents, which comprise

    ◦ vulcanization accelerators in the range of 1 to 5 phr, and
    ◦ sulphur in an amount in the range of 1 to 5 phr.

$S_z$

$S_y$

CL

DIR1

112

110

101

109

102

111

TYR1

103

104

105

106

107

## Fig. 1a

101

DIR1

+SR

SAX

TYR1

+SR

−SR

SAX

106

108

## Fig. 1b

CL

112    113    114

DIR1

$S_z$

$S_y$

101

d2

d4

d3

+SR

−SR

102

d1

Ws

## Fig. 2

CL

DIR1

110    109

115

d6

116

101

d2

+SR

-SR

102

d1

d5

111

$S_z$

$S_y$

Fig. 3

RUB2        RUB1

CB1

ADD1

11    mixing

TRB1

TRB2

12    assembling

TXT1

MET1

GT1

13    curing

TYR1

Fig. 4

Tan δ from rubber component in compression

Fig. 5

Tan δ from pneumatic tyre in compression

Fig. 6

E* from rubber component in compression

Fig. 7

E* from pneumatic tyre in compression

Fig. 8

Europäisches Patentamt

European Patent Office

Office européen des brevets

# EUROPEAN SEARCH REPORT

Application Number

EP 23 17 2093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/372254 A1 (MONDAL ANUP [NL] ET AL) 24 November 2022 (2022-11-24) * E1-3 table 1, 3 * | 1-15 | INV. C08L9/00 |
| A | US 2019/062535 A1 (BROEMMEL ANTONIA FELICITAS [DE] ET AL) 28 February 2019 (2019-02-28) * example table 5 * | 1-15 | |
| A | US 2019/062529 A1 (ISITMAN NIHAT ALI [US] ET AL) 28 February 2019 (2019-02-28) * E2-4 table 1 * | 1-15 | |

TECHNICAL FIELDS SEARCHED (IPC)

C09J
C08L

The present search report has been drawn up for all claims

| Place of search | Date of completion of the search | Examiner |
|---|---|---|
| Munich | 17 October 2023 | Ritter, Nicola |

EPO FORM 1503 03.82 (P04C01)

## ANNEX TO THE EUROPEAN SEARCH REPORT
## ON EUROPEAN PATENT APPLICATION NO.

EP 23 17 2093

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2023

| Patent document cited in search report | | Publication date | Patent family member(s) | | Publication date |
|---|---|---|---|---|---|
| US 2022372254 A1 | | 24-11-2022 | EP | 4041819 A1 | 17-08-2022 |
| | | | US | 2022372254 A1 | 24-11-2022 |
| | | | WO | 2021069514 A1 | 15-04-2021 |
| US 2019062535 A1 | | 28-02-2019 | CN | 109422938 A | 05-03-2019 |
| | | | EP | 3450204 A1 | 06-03-2019 |
| | | | US | 2019062535 A1 | 28-02-2019 |
| US 2019062529 A1 | | 28-02-2019 | CN | 109422930 A | 05-03-2019 |
| | | | EP | 3450465 A1 | 06-03-2019 |
| | | | US | 2019062529 A1 | 28-02-2019 |

EPO FORM P0459

For more details about this annex : see Official Journal of the European Patent Office, No. 12/82